# EUROPEAN PATENT APPLICATION

(11) **EP 2 262 350 A1**
(43) Date of publication of application: **15.12.2010**
(21) Application number: 09164468.2
(22) Date of filing: 02.07.2009
(51) Int. Cl.: H05B 37/02

(54) **Lighting unit, network of lighting units and method for controlling the light intensity of a lighting network comprising at least one lighting unit**

(30) Priority: 10.06.2009 EP 09162462
(71) Applicant: iLEDs GmbH, 14532 Kleinmachnow (DE)
(72) Inventor: Mokhtari, Ramin Lavae, 14532 Kleinmachnow (DE); Lang, Ortwin, 30880 Laatzen (DE)
(74) Representative: Kinkeldey, Daniela

(57) **Abstract**

The invention relates to a lighting unit comprising a lighting element comprising at least one LED, a processing unit for controlling the light intensity of the at least one LED, an ambient sensor for measuring at least one ambient parameter within a predetermined range of the lighting unit, a data storage unit containing at least one light intensity value for a predetermined period of time connected with a time value, a time registration device for providing a time value, wherein the processing unit is adapted such that one of the at least one light intensity values is chosen depending on the provided time value and the light intensity is controlled on basis of the chosen light intensity value and the at least one measured ambient parameter.

## Description

The present invention relates to a lighting unit, network of lighting units and method for controlling the light intensity of a lighting network comprising at least one lighting unit.

For providing an illumination on streets, railway stations, harbours, parking places or other exterior scenarios currently different systems are discussed. In regard to effectiveness one aspect is the use of LEDs (light emitting diode), which ensures a reduction of power consumption in respect to usual lighting means. A further aspect is an effective control of local networks of individual lighting elements, e.g. of lanterns, street lamps or lamps in a railway or metro station.

It is one object of the invention to provide a possibility for an effective illumination particularly for exterior scenarios which is cost and energy efficient.

This object is solved by what is disclosed in the independent claims. Advantageous embodiments are described by the dependent claims.

Preferred embodiments are:
A lighting unit comprises a lighting element with at least one LED. The light intensity of the at least one LED is controlled by a processing unit. Further, an ambient parameter is measured by an ambient sensor and is detected within a predetermined range of the lighting unit. This predetermined range may be defined by the light cone of the lighting element or a range of the ambient sensor.

The lighting element may comprise, only one LED or a group of LEDs. The number and also the type of used LED depends on the purpose, e.g. the desired brightness, the height of a street lantern and the area to be illuminated.

The lighting unit further comprises a data storage unit wherein at least one light intensity value is stored for a predetermined time interval. E.g. a first light intensity value is provided for the time interval between 8 o'clock in the evening and midnight, where a maximum of illumination might be needed. At twilight times between 5 and 8 o'clock in the evening, as well as in corresponding morning hours, different illumination values are provided, according to which the brightness is dimmed in relation to the maximum value. For the daylight time between 8 o'clock in the morning and 5 o'clock in the evening a light intensity value may correspond to 0% of the maximum value as no illumination is needed.

Preferably the light intensity values can be adapted according to the actual requirements such as winter, summer, position, weather or other factors that influence the required illumination for a predetermined time interval. In the case of a lighting network this may be done by providing external control data to the lighting unit.

A corresponding time interval is chosen by use of a time registration device, by which a time value is provided. The time value, e.g. 9 o'clock in the evening, lies within the time interval between 8 o'clock in the evening and midnight, which is chosen accordingly and thus the light intensity value for this time interval is chosen.

The time registration device may measure the time value itself or receive a time value. Particularly, the time registration device may be contained in the processing unit.

The processing unit is adapted such that one light intensity value is chosen dependent on the provided time value and further the light intensity is controlled on the basis of the chosen light intensity value and a measured ambient parameter. The ambient parameter may be e.g. the surrounding light intensity, particularly in order to control the illumination for cloudy or sunny days, a movement, measurement in order to detect whether there are any activities in the area of the lighting unit so that it can be determined whether an illumination is required. Further, the ambient parameter may be a destruction or removal of at least one part of the lighting unit in order to detect any theft or act of vandalism at the lighting unit. Further, the ambient parameter can comprise a measurement of the quality of the LED, e.g. the required brightness for a given driving current at a predetermined distance from the LED.

The existence of an ambient sensor in a lighting unit provides - if a network of lighting units is considered - ambient data relating to the positions, which are to be illuminated. Thus, without further separate measurement units the ambient data can be gathered exactly at the position where they are needed for an adequate illumination.

Apart from other advantages such as lifetime, robustness and low power consumption the use of LEDs for illuminating an exterior is that the emitted light is scattered significantly less than with usual light sources. Thus, the light pollution can be reduced. Further, the LEDs can be chosen such that a low colour temperature is achieved. Thus, insects are less attracted by the lighting units and therefore not destroyed. Further, the lighting units are soiled less with the remains of insects.

According to another embodiment the lighting unit further comprises a wireless transmission unit for receiving and/or additionally sending data. Thus, external control information can be received by the lighting unit to respond e.g. to centrally given instructions. Further, data can be sent from a lighting unit to a central unit or another lighting unit in regard to measured ambient parameters, such as movement, failures etc. at the lighting unit.

According to a further embodiment, the wireless transmission unit is adapted for short range transmission, i.e. a transmission to another lighting unit, particularly a neighboured lighting unit. Thus, a communication between lighting units can be established, e.g. for the exchange of ambient parameters.

According to another advantageous embodiment the wireless transmission unit is adapted for short range transmission as well as for long range transmission. By the short range transmission, e.g. up to a few hundred meters, the communication between individual lighting units can be ensured. By the long range transmission, e.g. realised by mobile communications standards, such as GSM or UMTS, a communication with a central control unit can be ensured. The central control unit may be accessed directly by this long range communication standard or via at least one further network, e.g. an internet network.

According to another embodiment the control is set up on basis of or by using at least one ambient parameter for an open loop or a closed loop control of the light intensity of the lighting element or each individual LED. Thus, it can be responded quickly to a required brightness. Alternatively or additionally an accurate control taking into regard the brightness due to the actually emitted light can be effected.

According to another embodiment an internal control signal may be provided by the processing unit to an electrical circuit for controlling the light intensity of the lighting element or the LED. This internal control signal is bit angle modulated to provide an effective and easy control. Particularly in response to the internal control signal the electrical circuit may provide the driving current to each LED separately or to a group of LEDs or to the lighting element as a whole. Alternatively, a driving voltage may be provided.

Particularly AC or DC current may be provided to an individual LED, a group ofLEDs or the lighting unit. An electrical circuit of the lighting unit may be arranged such that either AC or DC power can be received. Alternatively, an AC/DC switch may be provided for selecting either AC or DC power. According to an advantageous embodiment the lighting unit may comprise a power conversion unit for providing solar or wind energy to the lighting unit, Particularly, further energy storing units, such as batteries, are provided in order to compensate for times when e.g. there is no wind or sun. Thus, the lighting unit needs not to be connected to a power network.

According to a further embodiment a lighting network is formed which comprises at least two lighting units which communicate with each other by use of wireless transmission unit. One of the two lighting units acts as a master lighting unit which provides external control data to at least one other lighting unit which acts as a slave lighting unit.

The master lighting unit may create the external control data by itself or receive them via its wireless transmission unit, which is particularly also adapted for a long range transmission, such as a wireless telecommunication transmission.

Such a lighting network has the advantage of an effective overall control because only the master lighting unit has to be addressed in order to change the light intensity for any lighting unit in the network. Thus, the number of long range transmission is reduced and also only a master lighting unit needs a wireless transmission unit adapted for long range transmission. Thus, the production costs for slave lighting units can be reduced.

Further, e.g. in comparison to a network for which each individual lighting unit which is not equipped for performing a long range transmission, is controlled via communication to a central control unit, the size of the network can be increased, because a slave lighting unit needs only to communicate to a neighboured lighting unit or a lighting unit being within the range of its wireless transmission unit.

Further, as a local control for a predetermined area is hidden in a master lighting unit, it is more difficult to destroy a lighting network than if, e.g. the local control was positioned in a highly visible or at least better visible position.

According to an advantageous embodiment an anti-theft system is included. Particularly the anti-theft system works such that a lighting unit works only in its lighting network. Further, in case of a theft, a theft message may be sent to a neighboured lighting unit.

According to another advantageous embodiment the master lighting unit in a lighting network receives one or more ambient parameters from one or more slave lighting units. The master lighting unit uses this or these ambient parameter(s) in order to create external control data, These external control data are then sent to one or more specified slave lighting unit(s). Thus, the ambient data for the relevant areas to be illuminated are available for the lighting network and not e.g. data from sensors at positions not relevant for the lighting network. Further, no additional sensor data have to be used and thus the lighting network can be operated independently from other networks.

Alternatively or additionally, the ambient parameters may be sent from the master lighting unit to a central control unit, which uses it for creating the overall control information or protocols. According to another embodiment external control data are created by using overall control information from a central control unit, e.g. a web server or a local control master, e.g. a laptop, PC, PDA, etc.

The overall control information may particularly refer to individual lighting units or to a group of slave lighting units depending on the master lighting unit to which the control information was sent.

According to another embodiment information is transferred from a lighting unit to a neighboured lighting unit. Thus, the transmission range can be reduced and accordingly the sending power in order to reduce interferences or radiation exposure of persons staying in the area of the lighting unit or lighting network.

In an advantageous embodiment a substitute master lighting unit is provided which replaces the original master lighting unit in case of a failure. Thus, the network can be operated more reliably. Alternatively, less reliable components can be used which are less expensive.

According to a further embodiment the master lighting unit has an interface by which an access network can be accessed. Particularly, the access network may be an internet network and the interface a web interface. By providing this interface communication outside the lighting network can be established in order to remotely control the light intensity in the lighting network, e.g. from a central control. Further, the range of the network can be increased.

According to an advantageous embodiment external control data provided to a slave lighting unit are stored in the data storage unit of the slave lighting unit in addition to the already existing data or by overwriting the already stored data. Thus, a flexibility of the lighting behaviour can be achieved by providing data adapted to different situations, e.g. summer or winter with different sunshine times.

According to a further embodiment a network is formed which comprises the lighting network, an access network and a server unit. Data are transferred between server unit and lighting unit via at least one master lighting unit, by which a connection can be provided via the access network. Thus, advantageously overall control information can be provided in a server unit. The server unit may be a web server unit which receives the information by a user or via an interface to a further program, e.g. an SAP software. Further, the server unit may be a local control device, such as a laptop or PDA. The overall control information is transferred to at least one master lighting unit. The master lighting unit creates external control data using the overall control information which are then transmitted from the master lighting unit to one or more slave lighting units,

Particularly by the further program parameters such as desired consumed energy or cost objectives are used for establishing the overall control information.

According to an advantageous embodiment the ambient data may be used for remote maintenance protocols for individual or groups of lighting units. Further, it may be used for cadastral protocols describing number, position, state of individual lighting units. Further, it may be used for failure notices or for the creation of overall control information.

According to an advantageous embodiment a light primary control unit is formed which provides illumination control information to at least one master lighting unit. The illumination control information is based on information provided by the master lighting unit, which again may collect information from dependent slave lighting units, and by central control information, such as the desired illumination scenario. Therefore, for this central control information e.g. the required illumination, the target costs, may be considered. The information collected from the master and slave lighting units may particularly comprise data from movement detectors.

A desired illumination scenario may be e.g. village fair or public holiday.

Further aspects and advantages of the invention are described in relation to accompanying drawings of which show:
- Figure 1:: a schematic drawing of the setup of a lighting unit;
- Figure 2:: a schematic drawing of a lighting network;
- Figure 3:: a perspective view of a lighting unit.

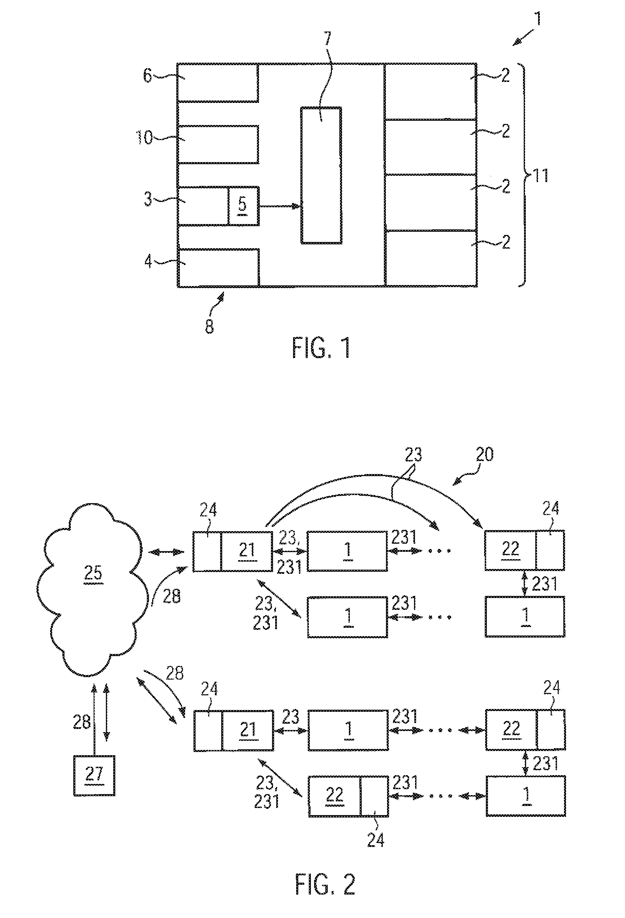

In Figure 1 a lighting unit 1 comprising several LEDs 2 is depicted. The light intensity of each LED 2 is controlled by a processing unit 3. The processing unit 3 provides an internal control signal 9 to an electrical circuit 7 by which a predetermined current is supplied to an individual LED 2 or a group of LEDs 2.

The internal control signal 9 is particularly bit angle modulated. For this modulation a signal is produced, the binary value of which corresponds to the desired intensity of a single LED 2 or a group of LEDs 2.

The processing unit 3 comprises or is connected to an internal or an external data storage unit 5. This data storage unit 5 contains data in relation to the light intensity, particularly the light intensity for a predetermined time interval at each day of a year. The data storage contents can be overwritten. Alternatively, the data storage unit is a read-only memory (ROM).

Further, the lighting unit 1 comprises an ambient sensor 4 for measuring an ambient parameter 8. This ambient sensor 4 is particularly a movement detector for measuring a movement within a predetermined range of the lighting unit, e.g. within the light cone defined by the lighting unit 1.

Alternatively or additionally, the ambient sensor 4 is a light intensity measuring unit for measuring the light intensity of a single LED 2 or a group of LEDs 2. By comparison with a reference value for the light intensity a deviation to the reference value can be determined and can be corrected.

The lighting unit 1 further comprises a local wireless transmission unit 6 for sending or receiving data particularly in a range of less than 300 meters. Via this local wireless transmission unit 6 a network of two or more lighting units can be established. Particularly in case of master lighting units the unit includes an additional GPRS or comparable transmission standards for connecting the lighting unit 1 over longer distances. Thus, the wireless transmission unit comprises at least a module for establishing a connection in a short range, e.g. up to a few hundred meters, and optionally a module for a long range connection, e.g. a wireless telecommunications connection such as e.g. GPRS.

The lighting unit 1 further comprises a time registration device 10 which measures or receives points of time. By using these points of time provided by the time registration device 10 a time interval can be chosen by the processing unit 3 and the light intensity value corresponding to the chosen time interval can be taken from the data storage unit 5.

Particularly, the time registration device 10 can be contained in the processing unit 3. Alternatively, the time registration device 10 may receive points in time by use of the wireless transmission unit 6 which are measured externally.

One LED 2 or a group of LEDs 2 form the lighting element 11. The number of LEDs 2 depends on the desired purpose of the lighting unit 1, e.g. for a high desired light intensity a higher number of LEDs 2 may be used. Alternatively or additionally, the number of LEDs 2 depends on height of the lantern from which a certain area on the ground is to be illuminated.

Further, the lighting element 11 may comprise a group of LEDs 2 of the same type. This facilitates the control of the lighting unit, because each of the LEDs has approximately the same characteristics. Alternatively, different types of LEDs may be used in order to achieve a desired colour. Also, LEDs 2 of different brightness might be used. The lighting element 11 may be set up by an array of LEDs 2, which are arranged immediately neighboured to each other. Alternatively, the LEDs 2 may be distributed on several distinct arenas at the lighting unit 1.

If the lighting unit I is used for the illumination of a street or a railway station, an LED 2 or a group of LEDs 2 is used which emit light with a high blue fraction, lye, cool light, e.g. corresponding to a temperature range above circa 3,500 K. This has the advantage that insects are less attracted by this cool light than it would be the case with warmer light The lighting unit 1 is contained in a lamp hat. This ensures a compact setup of all components, Alternatively, e.g. for a street lighting the lighting unit may be distributed over the lamp hat and the rod for supporting the lamp hat.

The wireless transmission unit 6 is a transmission unit which works in the regime around 2.4 GHz and uses an encryption of at least 128 bit. This ensures that common wireless transmission units can be used which makes the production cheaper. Further, it ensures that the necessities for establishing a network of street lamps with a limited range between one street lamp and another street lamp are met. Alternatively, other frequency bands are used which are suitable in respect to range, interferences and allowed frequency bands.

The electrical circuit 7 for driving the LED 2 or a group of LEDs 2 is designed to run alternatively on either DC or AC power.

In case of AC power input the circuit includes a AC-DC converter followed by a constant current source which can comprise an electronic component for controlling the operating current of a LED 2 or a group of LEDs 2 by using a signal with bit angle modulation other than the pulse width modulation.

In case of DC power input the AC-DC converter will be by-passed. This enables the light units to be able to use both DC and AC power for example by using solar and/or wind power in parallel to the general AC network. It is possible that AC power is not needed at all when units are planned to run on DC power networks like the ones for train systems. In this case there will be no need for the AC-DC converter.

According to an embodiment a switch is provided in order to select between AC or DC power. Thus, the lighting unit can be used in DC power networks, driven by batteries or solar panels as wen as AC power networks.

When using bit angle modulation, the LED is driven by a pulse train that is the binary word defining the value of a required intensity. Each bit of the pulse train is stretched by a ratio defined by the binary significance of each bit. Each bit of the binary word is effectively allocated a fixed range of phase angles within the drive cycle. The advantage of bit angle modulation is a simple implementation, and, as the drive signal is a multiple of the modulation frequency, a reducing of potential flicker. Also, because the LED drive signal contains a digital code of the intensity value, other devices may recover the data. According to another embodiment, the lighting unit 1 further comprises a solar panel. By use of the solar panel the energy converted from light may be used in addition to otherwise provided energy in order to drive the LED. Excess energy may be stored by use of batteries also positioned in or at the lighting unit 1. Thus, light energy can be stored e.g. for use during the night or when there is no sunlight.

Additionally or alternatively, the lighting unit 1 comprises a wind energy converter. The power of the wind energy converter is adapted to the power consumption of the lighting unit 1. A wind energy converter can be used e.g. when there is no sunlight.

According to another advantageous embodiment the processing unit 3 controls the use of wind and solar energy.

In Figure 2 a schematic drawing of a network 26 comprising a lighting network 20 is depicted. The lighting network 20 comprises one or more master lighting units 21 and one or more lighting units 1 which act as slave lighting units.

A master lighting unit 21 is used for establishing a connection to a remote control. Therefore, a master lighting unit 21 has a module for a long range connection, e.g. a wireless telecommunication module.

Each lighting unit 1 has a unique identification number and has access to the two or more following and two or more preceding units. A master lighting unit 21 provides external control information 23 to lighting units 1 which are therefore denoted as slave lighting units. The lighting units 1 transmit the information 23 as 231 to the next neighbours and so on. The transmission stops if specified or continues until the forwarded information arrives back at the master lighting unit 21. Preferably, information or external control data 23 are transmitted between neighboured lighting units 1 or between a neighboured master lighting unit 21 and a lighting unit 1. Alternatively or additionally, data are transmitted from the master lighting unit 21 to each slave lighting unit. Any information 23 is coded for one specific lighting unit 1 by its identification number or for all lighting units 1 in the local area network. Since some lighting units 1 may be in far distance from the master unit the information is being sent to the next two units and they forward the external control information 23 as forwarded external control information 231 to the next neighbours until the information is being received by the respectively addressed identification number. Alternatively, the process can start in the other direction.

For compensating a possible failure of a master lighting unit 21 a substitute master lighting unit 22 is provided. The function of the substitute master lighting unit is as follows: the processing unit 3 of the substitute master lighting unit 22 monitors if external control data 23 from the master lighting unit 21 is received with a certain rate. If no external control data are received for a set time interval, the substitute master lighting unit 22 starts a test signal to find out whether this is due to a failure of a neighboured slave lighting unit or due to the failure of the master lighting unit 21. If it is found that it is due to a failure of the master lighting unit 21, the substitute master lighting unit 22 takes the position of the master lighting unit 21 by activating its interface 24 to an access network 25.

Alternatively, the master lighting unit 21 may send a signal indicating its failure upon which the substitute master lighting unit 22 takes over.

A master lighting unit 21 has in addition to a normal or slave lighting unit 1 an interface 24 for accessing an access network 25 by which data can be transferred to a server unit 27. This interface 24 is particularly the module for establishing a long range connection. Thus, overall control information 28 for controlling the whole lighting network 20 can be provided from a server unit 27 via the access network 25 to each or some, at least one, of the master lighting units 21. The master units can alternatively be accessed by a local control master (laptop, PC, PDA, etc.) (not shown). Both local control master and server 27 can initiate communication process particularly via an SMS signal which can also be received by the master lighting unit 21.

A possible embodiment of a function of the network 26 when using a movement detector as ambient sensor 4 is provided below:
By the movement detector as ambient sensor 4 a movement is measured as ambient parameter 8 within the light cone of a street lamp or lantern. This movement takes place within a predetermined time interval, e.g. 10 seconds, which is either originally provided in the data storage unit 5 or set by the master lighting unit 21 by sending external control data. This time interval may be adapted to the required situations. E.g. for an illumination at a railway station, where fast moving objects are to be detected, a shorter time interval than for example for streets might be used.

The sensitivity for a movement within the light cone is set such that neither small animals, such as moths, birds, cats or dogs, nor oscillating movements, such as moving trees or bushes are detected. By using the measurements of the neighboured lighting units 1, which all transfer their movement measurements as ambient parameter 8 to their local memory storage or data storage unit 5 and can deliver the data by request to a master lighting unit 21, a direction and velocity of the movement can be determined, and the master lighting unit 21 can send corresponding external control data 23 to ensure a desired illumination, e.g. bright illumination, along the direction of the movement with the corresponding velocity.

This movement detection can take place either in a predetermined time interval, e.g. during the night when the illumination is normally off, or during the whole 24 hours. Further, a distinction between working days and weekends may be provided. A change of brightness from 0 to 100% of the maximum intensity or vice versa may be provided as well as a change between different dimming levels, e.g. 25%, 50 %, 75 % of the maximum intensity etc.

A further example for a chain of action is given for a light intensity detector as ambient sensor 4. The light intensity of the lighting element 11 or at least one individual LED 2 is determined in a predetermined range from the lighting element 11 or the LED 2. In a control circuit, a deviation between the reference value describing the desired light intensity and the actually measured light intensity is determined. The deviation is determined in multiples of a certain unit, e.g. 5%, in order not to initiate any close loop control for very small deviations which would lead to instabilities. If the measured deviation is within a certain range, e.g. 10 to 15%, the individual lighting unit I may compensate this by providing different driving parameters by the electrical circuit 7 to the individual LED or the whole lighting element 11.

For higher deviations this deviation information is provided from the slave lighting unit to the master lighting unit 21 which communicates this to the server unit 27 in order to provide data for maintenance of the lighting network 20.

According to another embodiment an anti-theft detector is used as ambient sensor 4 . The anti-theft sensor supervises any removal or destruction of parts of the lighting unit 1. In case a removal or destruction is detected, a signal is provided by the anti-theft detector and transmitted towards the master lighting unit 21 by use of the wireless transmission unit 6. This further facilitates the maintenance of lighting network 20.

A particular advantage of the described network 26 is that the control of the lighting network 20 is realised via at least one master lighting unit 21 instead of controlling each individual lighting unit 1 separately. Thus, the master lighting unit 21 provides data of all related slave lighting units, so that the master lighting unit 21 and the related slave lighting units form a single virtual light unit.

According to a further embodiment, each lighting unit 1, master lighting unit 21 and substitute master lighting unit 22 has an identification number. Further, in the data storage unit 5 an identification number of at least two neighboured lighting units 1 is stored, i.e. the processor and successor. A signal which is dedicated to a specific lighting unit 1 or all lighting units 1 is sent from the master lighting unit 21 first to the directly neighboured lighting unit 1 and also to the next following neighbour in case any unit is not working well. This neighboured lighting unit 1 then transmits a message to its successor, and transmits back to the master lighting unit 21 a confirmation about the successful or unsuccessful transmission. In this way the message is transmitted from lighting unit I to lighting unit 1 until it arrives back at the master lighting unit 21. This procedure is either repeated until it is performed without an error or an error message is send to the master lighting unit.

The above described embodiments can be combined or some of their features may be combined, Particularly, several ambient detectors 4 are used and the control of the light intensity considers the respective ambient detector signal.

Additionally, the ability to control a multitude of such local networks through a global network combining all at least one local network into one global network acting as one entity being wirelessly connected through the web, or internet, and collectively managed by one central server is realised.

Such a network may be particularly applied for a central control of individual lighting units at train platforms, railway tracks or railway freight depots.

Particularly illumination data of a lamp can be supervised and analysed. Therefore, an individual lighting unit sends as ambient parameter the required illumination data, e.g. duration of illumination time in predetermined time intervals to a master lighting unit, which collects these data from various lighting units and transmits this information further to a central entity such as the server unit 27 or a maintenance computer. Alternatively or additionally, this information may be received by polling the lighting units,

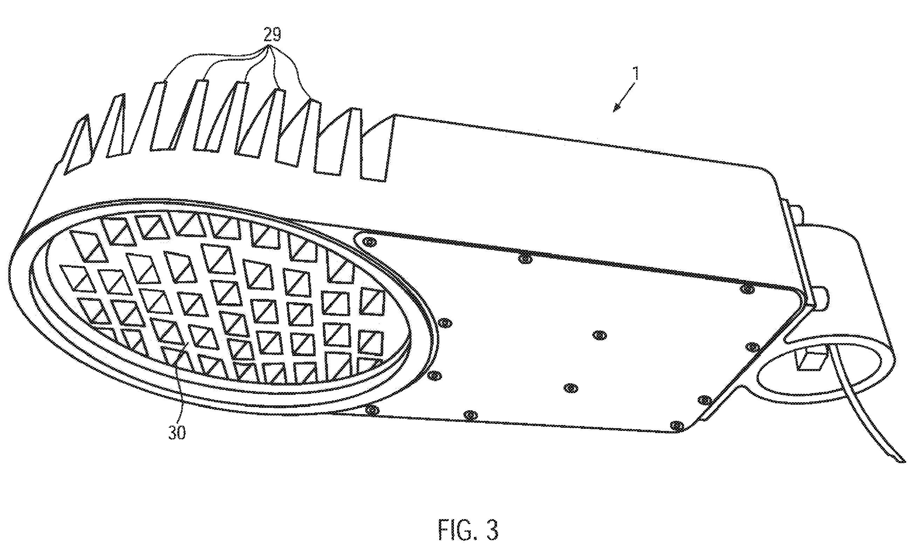

In Figure 3 a perspective view of a lighting unit 1 is depicted. The LEDs are contained in a housing which comprises ribs 29 for dissipating heat. Further, it comprises a reflector 30 for reflecting the light emitted by the LEDs or group of Such that at a predefined distance from the LED or group of LEDs or the lighting unit, a uniform illumination is achieved.

Thus, particularly the present invention relates to a wireless connected network (a WLAN wireless local area network between lighting units on one geographic area) comprising at least one lighting unit acting as a master lighting unit and at least one lighting unit acting as a slave lighting unit collectively connected to a central server through the web (GAN global area network) or to a master controlling unit being installed on a laptop or PC located particularly in less than 300 meters distance. The connection to the web or internet or other networks, e.g. private LANs etc, or to the master controlling unit is wireless. Each lighting unit is not further than 300 meters from each other.

### List of Reference Numbers

- 1: lighting unit
- 2: LED
- 3: processing unit
- 4: ambient sensor
- 5: data storage unit
- 6: wireless transmission unit
- 7: electrical circuit
- 8: ambient parameter
- 9: internal control signal
- 10: time registration or scheduling device in CPU
- 11: lighting element
- 20: lighting network
- 21: master lighting unit
- 22: substitute master lighting unit
- 23: external control data
- 24: interface
- 25: access network
- 26: network
- 27: server unit
- 28: overall control information
- 29: ribs
- 30: reflector
- 231: forwarded external control information

## Claims

1. Lighting unit (1, 21, 22) comprising
a) a lighting element (11) comprising at least one LED (2);
b) a processing unit (3) for controlling the light intensity of the at least one LED (2);
c) an ambient sensor (4) for measuring at least one ambient parameter (8) within a predetermined range of the lighting unit (1, 21, 22);
d) a data storage unit (5) containing at least one light intensity value for a predetermined period of time connected with a time value;
e) a time registration device (10) for providing a time value;
wherein the processing unit (3) is adapted such that
- one of the at least one light intensity values is chosen depending on the provided time value and
- the light intensity is controlled on basis of the chosen light intensity value and the at least one measured ambient parameter (8).

2. Lighting unit (1, 21, 22) according to claim 1 further comprising a wireless transmission unit (6) for receiving and/or sending data.

3. Lighting unit (1, 21, 22) according to claim 1 or 2 wherein the ambient parameter (8) is used for an open loop control or a closed loop control of the light intensity.

4. Lighting unit (1, 21, 22) according to any of the previous claims wherein the ambient sensor (4) is a movement detector for detecting a movement within a predetermined range of the lighting unit (1) or/and a detector for measuring the light intensity of the at least one LED (2) or/and the lighting element (11) at a predetermined position.

5. Lighting unit (1, 21, 22) according to any of the previous claims wherein the processing unit (3) provides an internal control signal (9) to an electrical circuit (7) for controlling the light intensity of the lighting element (11) or/and the at least one LED (2), wherein the internal control signal (9) is bit angle modulated.

6. Lighting network (20) comprising at least two lighting units (1, 21, 22) according to any of the previous claims 2 to 5, wherein
- data are transferrable between the at least two lighting units (1, 21, 22) by use of the wireless transmission units (6) and
- one of the at least two lighting units (1, 21, 22) is adapted as master lighting unit (21) providing external control data (23) for controlling the light intensity to the other of the at least two lighting units (1, 21, 22) adapted as slave lighting unit (1);

7. Lighting network (20) according to claim 6 wherein the wireless transmission unit (6) and the processing unit (3) of the master lighting unit (21) is adapted such that
- at least one ambient parameter (8) from at least one slave lighting unit (1) is received;
- external control data (23) are created; and
- external control data (23) are sent to the at least one slave lighting unit (1).

8. Lighting network (20) according to claim 6 or 7 wherein the processor unit (6) of the at least one master lighting unit (21) is adapted such that
- external control data (23) are created by using an ambient parameter or/and using overall control information.

9. Lighting network (20) according to any of the previous claims 6 to 8 wherein the lighting network (20) comprises a ring of lighting units (1, 21, 22) and wherein data are transferrable from a lighting unit (1, 21, 22) to a neighboured lighting unit (1, 21, 22).

10. Lighting network (20) according to any of the previous claims 6 to 9 wherein at
least one substitute master lighting unit (22) is provided which acts as slave lighting unit (1) as long as the original master lighting unit (21) works and which acts as master lighting unit if the original master lighting (21) unit fails.

11. Lighting network (20) according to any of the previous claims 6 to 10 wherein the at least one master lighting unit (21) further comprises an interface (24) for accessing an access network (25), particularly a web interface for an internet network.

12. Lighting network (20) according to any of the previous claims 6 to 11, wherein the processing unit (6) of the at least one slave lighting unit (22) is adapted such that external control data (23) provided by the master lighting unit (21) are stored in the data storage unit (5) of the at least one slave lighting unit (1).

13. Network (26) comprising a lighting network (20) according to any of the previous claims 6 to 12, an access network (25) and a server unit (27), wherein data are transferred between the lighting network (20) and the server unit (27) via the at least one master lighting unit (21) and the access network (25).

14. Network according to claim 13, wherein overall control information (28) for controlling the light intensity of a light network (20) is transmitted from a web server unit (27) via the internet to the at least one master lighting unit (21).

15. Method for controlling the light intensity of a lighting network comprising at least one master lighting unit (21) and at least one slave lighting unit (1) comprising the following steps:
- providing overall control information (28) in a server unit (27);
- transmitting said overall control information (28) to the at least one master lighting unit (21);
- creating external control data (23) in the at least one master lighting unit (21) or local control device using the overall control information (28);
- transmitting external control data (23) from the at least one master lighting unit (21) to at least one slave lighting unit (1).
